(19) Europäisches Patentamt / European Patent Office / Office européen des brevets

(11) **EP 4 225 479 B1**

(12) **EUROPEAN PATENT SPECIFICATION**

(45) Date of publication and mention
of the grant of the patent:
**06.05.2026 Bulletin 2026/19**

(21) Application number: **21878263.9**

(22) Date of filing: **01.10.2021**

(51) International Patent Classification (IPC):
*B01D 71/06* (2006.01)    *B01D 71/26* (2006.01)
*B01D 69/12* (2006.01)    *C02F 1/42* (2023.01)
*C02F 1/44* (2023.01)    *C02F 103/04* (2006.01)

(52) Cooperative Patent Classification (CPC):
(C-Sets available)
**C02F 1/444; B01D 61/18; B01D 67/00931;
B01D 67/00933; B01D 69/02; B01D 69/1214;
B01D 69/1216; B01D 71/261; B01D 71/262;
B01D 71/82;** B01D 2311/06; B01D 2311/2623;
C02F 1/288; C02F 1/42; C02F 2101/108;    (Cont.)

(86) International application number:
**PCT/US2021/053081**

(87) International publication number:
**WO 2022/076249 (14.04.2022 Gazette 2022/15)**

(54) **FILTRATION MEMBRANE SYSTEMS, AND METHODS FOR PRODUCING PURIFIED WATER**

FILTRATIONSMEMBRANSSYSTEME UND VERFAHREN ZUR HERSTELLUNG VON
GEREINIGTEM WASSER

SYSTÈMES À MEMBRANES DE FILTRATION, ET PROCÉDÉS DE PRODUCTION D'EAU
PURIFIÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.10.2020 US 202063089970 P**

(43) Date of publication of application:
**16.08.2023 Bulletin 2023/33**

(73) Proprietor: **Entegris, Inc.**
**Billerica, MA 01821 (US)**

(72) Inventors:
• **HAMZIK, James**
**Billerica, MA 01862 (US)**
• **SAMPATH, Siddarth**
**Tyngsboro, MA 01879 (US)**
• **BREWSTER, Justin**
**Billerica, MA 01862 (US)**
• **BHABHE, Ashutosh Shrikant**
**6300 Zug (CH)**

(74) Representative: **Greaves Brewster LLP**
**Copa House
Station Road
Cheddar, Somerset BS27 3AH (GB)**

(56) References cited:
WO-A1-2017/044668    JP-A- 2004 337 749
US-A1- 2005 040 109    US-A1- 2013 112 618
US-A1- 2020 254 398    US-A1- 2020 254 398
US-B1- 6 767 460    US-B2- 10 040 033

• TANG YU PAN ET AL: "Recent advances in
membrane materials and technologies for boron
removal", JOURNAL OF MEMBRANE SCIENCE,
ELSEVIER BV, NL, vol. 541, 14 July 2017
(2017-07-14), pages 434 - 446, XP085187090,
ISSN: 0376-7388, DOI: 10.1016/
J.MEMSCI.2017.07.015

EP 4 225 479 B1

**(Cont. next page)**

(52) Cooperative Patent Classification (CPC): (Cont.)
C02F 2101/20; C02F 2101/308; C02F 2103/04

C-Sets
B01D 2311/06, B01D 2311/2623

**Description**

**FIELD**

The present disclosure relates to filter membranes, related filter assemblies and filtration systems, and related method useful for producing purified (e.g., ultrapure) water, including membranes, systems, and methods useful for preparing purified water that will be useable for processing (e.g., rinsing) semiconductor and microelectronic substrates, components, and devices.

The present invention is as defined in the appended claims.

**BACKGROUND**

Highly pure water, including water sometimes referred to as "ultrapure" water ("UPW"), is important for a variety of commercial uses, including in semiconductor processing (e.g., manufacturing semiconductor devices, liquid crystal displays, silicon wafers, printed circuit boards, and other electronic and microelectronic devices), in the operation of nuclear power plants, and in pharmaceutical manufacturing.

Purified water used in semiconductor processing is useful in semiconductor and microelectronic processing (as one example) as rinse water for cleaning or preparing of a surface of a semiconductor or microelectronic device substrate, e.g., as part of a "front-end" or "back end" process recipe. As uses, ultrapure water may be used in Wet Etch and Cleans ("WEC"), Photolithography and Chemical Mechanical Polishing ("CMP") of in-process microelectronic devices. The water must be of exceedingly high purity because impurities in water used to process a microelectronic device or semiconductor substrate, and that is left behind on a substrate surface, will affect the yield and short/long term performance of a resultant semiconductor or microelectronic device made from the substrate.

Filtering systems for preparing ultrapure water must be effective to remove impurities (a.k.a. "contaminants") to a very high degree of purity, and, for the sake of manufacturing efficiency, must do so for an extended period of time minimizing the need for replacement of a filtration element. Removing and replacing a filtration element of a filtration system that supplies ultrapure water to semiconductor processing equipment can require the equipment to be shut down for a period of time required to remove and replace the filtration element, i.e., a "changeout" period. The changeout period is expensive in terms of lost time of use of the semiconductor processing equipment, which results in reduced processing efficiency and increased overall costs. The changeout frequency and period can affect the efficiency of equipment that directly uses the purified water and can also affect processes that are performed downstream of the directly affected equipment.

Ultrapure water used in semiconductor processing is not completely pure but is understood to contain very low levels of contaminants that include silica particles (colloidal and hard $SiO_2$ particles), organics (dissolved and undissolved), and dissolved metals or metal-containing compounds such as such boron, silicon (e.g., as $SiO_2$), iron, and titanium. Boron and silica impurities are particularly problematic because current filtration systems are not sufficiently effective in removing and retaining boron and silica (e.g., colloidal and solid silica particles), or may be effective to remove these impurities from a flow of water for an operational lifetime that is not sufficiently lengthy.

Common designs of ultrapure water production facilities include an ion-exchange (IEX) resin in the form of a bed of polymeric beads through which water is passed for removal of ions from the water. The polymeric resin beads attract and retain trace ionic impurities and remove the impurities from the water flowing through the bed of polymeric beads. With such ion-exchange systems, after an amount of time during which the system is used to remove boron, silicon (e.g., solid and colloidal silica particles, or dissolved silica), or both, from a water source, the capacity of an ion-exchange resin bed to remove and contain (retain) boron, silicon, or both, becomes exhausted. The ability of the ion-exchange system to continue to remove additional amounts of boron or silicon (silica) from water is depleted and it no longer removes boron or silicon from a flow of water. When this occurs, these impurities begin to pass through the ion-exchange system and "leak" from the system to downstream equipment as unwanted impurities.

With ever increasing degrees of complexity in the integration of microelectronic devices, trace-level contaminants in ultrapure water become increasingly significant. Thus, ultrapure water having ever higher levels of purity is required to meet goals (economic and otherwise) related to wafer die yield and overall reliability of the semiconductor or microelectronic device.

**SUMMARY**

The following description relates to porous polymeric filter membranes that include a porous polymeric base membrane and amino polyol ligand that contains at least three hydroxyl groups ("the amino polyol" or "amino polyol ligand") attached to the base membrane. The description also relates to filters assemblies and filtration systems that include this type of filter membrane, as well as methods of using the filter membranes, filter assemblies, and filtration systems for filtering a source of water ("source water") to form purified (e.g., ultrapure) water.

Filter membranes as described are useful for removing impurities from a source of water and are particularly useful for removing metal impurities such as dissolved boron and silicon (e.g., as $SiO_2$) from a source of water to form purified (e.g., ultrapure) water. Purified water prepared according to described methods, and containing very low amounts of boron and silicon, may be useful in industrial processes that include (but are not limited to) semiconductor and microelectronic manufacturing processes such as for rinsing surfaces of semiconductor and microelectronic substrates.

As used herein the term "ultrapure water" is given a meaning that is commonly used in the semiconductor processing industry to refer to water that has been treated to an extremely high level of purity for a group of contaminant types that includes: organic and inorganic compounds; dissolved and particulate matter; volatile and non-volatile impurities; charged (anionic, cationic) and non-ionic impurities; reactive and inert impurities; hydrophilic and hydrophobic impurities; and dissolved gases. Ultrapure water is water that has been processed to remove organic particles, and dissolved gases, and other dissolved trace level impurities. Ultrapure water is commonly processed by three processing stages that include: a pretreatment stage to produce purified water, a primary stage to further purify the water, and a final "polishing" stage.

Various published standards exist for specifying levels of impurities present in ultrapure water. For microelectronics applications, these groups include Semiconductor Equipment and Materials International (SEMI) (microelectronics and photovoltaic), American Society for Testing and Materials International (ASTM International) (semiconductor, power), Electric Power Research Institute, American Society of Mechanical Engineers (ASME) (power), and International Association for the Properties of Water and Steam (IAPWS) (power). Pharmaceutical plants follow water quality standards as developed by pharmacopeias, of which three examples are the United States Pharmacopeia, European Pharmacopaeia, and Japanese Pharmacopeia.

Common requirements for ultrapure water quality are documented by ASTM D5127 "Standard Guide for Ultra-Pure Water Used in the Electronics and Semiconductor Industries," and SEMI F63 "Guide for ultrapure water used in semiconductor processing."

In one aspect, the disclosure relates to a polymeric filter membrane. The membrane includes: a porous polymeric base membrane, and amino polyol ligand having three or more hydroxyl groups attached to the polymeric base membrane.

In another aspect, the disclosure relates to a system useful for removing an impurity from a flow of source water. The system includes a polymeric filter membrane comprising a porous polymeric base membrane, and amino polyol ligand having three or more hydroxyl groups attached to the polymeric base membrane. The use of such membranes in composite filters is known from US2020/254398. The system also includes ion-exchange resin, and a flow of source water that passes through the polymeric filter membrane and the ion-exchange resin.

In yet another aspect, the disclosure relates to a method of removing an impurity from a flow of source water. The method includes flowing the source water through a polymeric filter membrane that includes a porous polymeric base membrane, and amino polyol ligand having three or more hydroxyl groups attached to the polymeric base membrane.

## BRIEF DESCRIPTION OF THE FIGURES

The disclosure may be more completely understood in consideration of the following description of various illustrative embodiments in connection with the accompanying drawings. The Figures are schematic and not necessarily to scale.

Figure 1 shows an amino polyol ligand relative to a base membrane, as described.
Figure 2 shows an example filter assembly of the description.
Figure 3 shows an example composite filter of the description.
Figure 4 shows an example filter assembly of the description.
Figures 5A and 5B show example components of filtration systems of the description.
Figure 6 schematically shows semiconductor manufacturing equipment used with a filter membrane and method as described.
Figure 7 schematically shows a testing system according to the Examples herein.
Figures 8, 9, 10, and 11 show test data of reference and comparative filter membranes.
Figure 12 schematically shows a testing system according to the Examples herein.
Figures 13, 14, 15, and 16 show test data of reference filter membranes.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described. On the contrary, the intention is to cover all modifications, equivalents, and alternatives falling within the spirit and scope of the disclosure.

## DETAILED DESCRIPTION

The following description relates to filter membranes that include a porous polymeric base membrane and amino polyol ligand that contains at least three hydroxyl groups (the "amino polyol" or "amino polyol ligand") as part of the filter membrane. The description also relates to filters assemblies and filtration systems that include this type of filter membrane, and methods of using the filter membranes, filter assemblies, and filtration systems for filtering a source of water to form purified (e.g., ultrapure) water.

Filter membranes as described can be used to remove impurities from a source of water and are particularly useful for removing metal impurities such as boron and silicon (e.g., dissolved $SiO_2$, or colloidal or solid $SiO_2$ particles) from a source of water to form purified (e.g., ultrapure) water. Purified water prepared according to described methods and containing very low amounts of boron and silicon (e.g., silica, $SiO_2$), may be used in industrial processes that include (but are not limited to) semiconductor and microelectronic manufacturing processes, such as for rinsing surfaces of semiconductor and microelectronic substrates. The described filter membranes can be configured for use in a microelectronic or semiconductor device manufacturing system as a point-of-use filtration system that processes a source of water directly upstream of the manufacturing system to supply purified (e.g., ultrapure) water for use with the manufacturing system. Alternatively, a filter membrane, filter assembly, or filtration system as described may be used to produce purified water (e.g., ultrapure water) for storage in a storage receptacle for optional storage, transport, and eventual later use.

A membrane as described includes a porous polymeric base membrane to which the amino polyol ligand is attached directly or indirectly. The base membrane (sometimes referred to as a "base" for short) may be a membrane in the form of a polymeric sheet (i.e., a flat, planar, two-sided porous membrane) made of any useful polymeric material or combination of materials. Example base membranes may be made of polymer material that is known to be useful for porous filtration membranes and that is capable of having amino polyol ligand attached to a surface thereof by chemical modification. The base membrane may be made of polymer that contains a reaction site to which amino polyol ligand can be attached or may be made of polymer that can be otherwise chemically coated or modified to provide a reaction site to which amino polyol ligand can be attached.

Example base membranes may be formed from one or more polymeric materials, e.g., a single polymeric material, a mixture of different polymeric materials, or a polymeric material and a non-polymeric material.

Polymeric materials that can be used to form the base membrane include various polymers, including hydrophobic polymers such as polyolefin or halogenated polymers. Exemplary polyolefins include polyethylene (PE), polypropylene (PP), polymethylpentene (PMP), polybutene (PB), polyisobutylene (PM), and copolymers of two or more of ethylene, propylene, and butylene. In particular embodiments, a base membrane may include ultra-high molecular weight polyethylene (UPE). Ultra-high molecular weight polyethylene filter materials, such as UPE membranes, are typically formed from a resin having a molecular weight greater than about $1 \times 10^6$ Daltons (Da), such as in the range of about $1 \times 10^6$ to $9 \times 10^6$ Da, or $1.5 \times 10^6$ to $9 \times 10^6$ Da. Crosslinking between polyolefin polymers such as polyethylene can be promoted by use of heat or crosslinking chemicals, such as peroxides (e. g. dicumyl peroxide or di-tert-butyl peroxide), silanes (e.g., trimethoxyvinylsilane), or azo esters compounds (e.g., 2,2'-azo-bis(2-acetoxy-propane).

Exemplary halogenated polymers include polytetrafluoroethylene (PTFE), polychlorotrifluoro-ethylene (PCTFE), fluorinated ethylene polymer (FEP), polyhexafluoropropylene, and polyvinylidene fluoride (PVDF).

In other embodiments, a base membrane may be made of polymer selected from: polyamide, polyimide, polysulfone, polyether-sulfone, polyarylsulfone, polyamides, polyacrylates, polyesters, nylons, celluloses, polycarbonates, or combinations thereof.

A base membrane that includes one or a combination of any of these polymers may comprise, consist of, or consist essentially of any one or combination of these polymers. A base membrane that consists essentially of a polymer or combination of polymers is a base membrane that contains the polymer or combination of polymers and not more than an insubstantial amount of other materials, e.g., not more than 5, 2, 1, 0.5, or 0.1 weight percent of other materials.

Specific examples of polymers useful for preparing porous polymeric filter membrane are described in United State patent publication 2020/0254398, the entirety of which is incorporated herein by reference.

The polymeric material of the base membrane can be chemically modified, in some modes of practice, to facilitate modification of the base membrane with the amino polyol ligand. The amino polyol ligand can include an amine group which can facilitate attachment to a polymeric material of a base membrane. If the polymeric material is not inherently amine-reactive, it can be modified such as by halogenation or haloalkylation to provide a surface-reactive chemistry for the attachment of the amino polyol ligand.

In some modes of practice, polymeric material of a base membrane is halogenated to provide amine-reactive sites. For example, polyethylene can be chlorinated by reacting gaseous chlorine at temperatures of greater than 50° C., optionally diluted with inert gas, with solid polyethylene powder (e.g., see U.S. Pat. No. 2,928,819).

In another mode of practice, the polymer of a base membrane can be haloalkylated, such as chloromethylated. Chloromethylation is a known technique used for modifying polymers and generally uses a chloromethylation reagent (e.g., bis-chloromethyl ether (BCME); chloromethyl methyl ether (CMME); formaldehyde/methanol/hydrogen chloride/-chlorosulfonic acid). Lewis acid and Friedel-Crafts catalysts, such as zinc chloride, zinc oxide, or ferric chloride, can be used with the chloromethylation reagents at elevated temperatures to modify the polymer (see, for example, US2003/0018091 (Pafford et al.) and WO2008/144115 (Harris et al.)). To provide the ligand of the disclosure on polymer material, the haloalkyl group of the haloalkyl-modified filter material can be reacted with an amine polyol or an amine polyphosphonic acid resulting in covalent bonding of ligand to the surface of the filter material.

In another mode of practice, the amino polyol ligand can be attached to a filter material through attachment with a reactive cross-linked coating. For example, the polymeric material can be coated with an amine reactive polymer such as poly(vinylbenzyl chloride), poly(epichlorohydrin), or an epoxy resin. The coated polymeric material can then be cross-linked and the remaining reactive sites used for attachment of the desired ligand. For example, poly(vinylbenzyl chloride) can be dissolved in a suitable solvent, dried onto a porous polymeric base membrane, cross-linked with a diamine, polyamine, or any other multifunctional reactive cross-linker, followed by attachment of an amine containing polyol ligand. Using a similar method, the cross-linking and ligand attachment can happen simultaneously. Alternatively, the amine reactive polymer can be crosslinked via irradiation or through use of photo-initiator crosslinking, followed by attachment of the amine containing ligand.

In yet another mode of practice, the ligand attachment can occur prior to coating on the polymeric base membrane. For example, an amino polyol functionalized polymer can be prepared by reacting an amino polyol ligand with a polymeric material having a functional group reactive with the amine of the ligand (such as poly(vinyllbenzyl chloride)). The base membrane can then be coated with the resulting amino polyol ligand-modified polymer and dried. Optional crosslinking techniques may also be used.

In another mode of practice, the base membrane may be modified with the desired amino polyol ligand via monomer cross-linking. For example, the desired amino polyol ligand can be in the form of a reactive monomer bearing acrylamide, vinyl, or other suitable unsaturated groups. An example of a reactive monomer bearing an amino polyol is the reaction product of vinylbenzyl chloride and N-methyl glucamine. The amino polyol-containing monomers can be added to monomer formulations containing di-functional monomers, such as, N, N'-methylenebisacrylamide. These monomer formulations can also contain photo-initiators, such as, OMNIRAD 2959 (1-[4-(2-hydroxyethoxy)-phenyl]-2-hydroxy-2-methyl-1-propane-1-one). Once the membrane is imbibed with the resulting monomer solution, the membrane can be irradiated (ultraviolet, electron beam, gamma, etc.) to form a cross-linked coating with the desired amino polyol ligand incorporated into the coating (see, for example, WO2017/205722 (Jaber et al.)).

In another mode of practice, the desired amino polyol ligand can be attached to a polymeric material via grafting from the membrane. "Grafting from" can be accomplished by irradiation of the polymeric material in the presence of a photo-initiator and an unsaturated monomer containing the desired the amino polyol ligand (see, for example, WO2016/081729 A1 (Jaber et al.)). In another mode of practice, the polymeric material can be attached with the desired amino polyol ligand via grafting from the membrane using electron beam or gamma irradiation. Grafting using electron beam or gamma irradiation can be accomplished using techniques known as pre-irradiation grafting or simultaneous irradiation grafting.

In another mode of practice, the polymeric material can be embedded with resin particles to form a hybrid particle/membrane base membrane. For example, porous poly(styrene-co-divinylbenzene) resin particles having the desired amino polyol ligand attached can be introduced to a polymer mixture used for membrane extrusion or membrane casting. Using this method, the resulting porous polymeric membrane would have embedded porous particles with the desired amino polyol ligand attached. In some embodiments, the resulting membrane can have a tight particle retentive membrane placed downstream of the porous particle containing membrane (see, for example, US 2009/0039019 A1 (Raman)).

The amount (concentration) of amino polyol ligand introduced to the polymeric material of the base membrane can be sufficient to allow the amino polyol ligand to become immobilized on a surface of the base membrane at a desired density. A ligand solution can be applied to surfaces of a base membrane by any useful technique, such as by spraying, submerging, soaking the base membrane in solution, or the like. Desirably, the entire surface of the base membrane can be contacted with the solution, such as all internal surfaces of a porous filter membrane. If necessary, the application step may include manipulation of the filter material, e.g., by rolling or squeezing a porous filter medium to cause wetting of all surfaces of the porous filter.

A porous base membrane, as well as a filter membrane made from the base membrane by chemically attaching a amino polyol ligand to the base membrane, can be described in terms of various physical features of a porous filter membrane. As used herein, exemplary porous base membranes of porous filter membranes include porous solids in the form of a two-sided sheet having opposed surfaces (sides), a length and a width extending along the two surfaces, and a thickness extending between the two opposed surfaces. The porous membrane contains porous (e.g., microporous) interconnecting passages (pores, channels, voids) that extend from one surface of the membrane to the opposite surface of the membrane. The passages generally provide tortuous channels or pathways through which source water being filtered must pass. Metal species of sizes small enough to pass through the pores of the membrane can be trapped on the membrane by interaction with the amino polyol ligand, such as by a chelation interaction between the ligand and the metal. This is referred to as a "non-sieving filtration mechanism."

The porous membrane can also function to physically prevent particles (e.g., metal containing particles) present within source water from passing through the membrane. Particles that are larger than the pores will be prevented from entering the membrane or may be physically prevented from passing through the membrane by the structure of the membrane (i.e., wherein particles are removed by a sieving-type filtration mechanism). Source water passes through the membrane, resulting in flow-through of water that contains a reduced amount of contaminants that are removed by the non-sieving or sieving mechanism, e.g., a reduced amount of ionic metal species, a reduced amount of metal-containing particulates, or both.

Accordingly, a porous filter membrane as described, comprising polymeric base membrane on which amino polyol ligand is attached, can be effective to remove metal and metal ion contaminants from source water that is passed through the membrane, as well as removing materials that are physically of a size too large to pass through the pores of the membrane.

Porous membranes of the disclosure can be described with reference to one or more properties of the membrane. Example porous polymeric filter membranes as described can be characterized by physical features that include pore size, bubble point, and porosity. For example, the membrane can be described in terms of bubble point, which is commonly used to reflect pore size.

A bubble point of a membrane is an indirect measurement of pore size that is based on the concept that, for a particular fluid and pore size, with constant wetting of the membrane, the pressure needed to force an air bubble through a porous membrane is inversely proportional to the size pores of the membrane. Methods for determining bubble point can include wetting a membrane, contacting one side of membrane with a gaseous fluid, and then determining a pressure at which the gaseous fluid can pass through the membrane as bubbles emitted from the opposite surface of the membrane. To determine the bubble point of a porous material a sample of the porous material is immersed in and wetted with ethoxy-nonafluorobutane HFE 7200 (available from 3M) at a temperature of 20-25° C (e.g., 22° C). A gas pressure is applied to one side of the sample by using compressed air and the gas pressure is gradually increased. The differential pressure at which wet flow is equal to one-half the dry flow (flow without wetting solvent) is called the bubble point.

In example filter membranes of the present description, a porous filter membrane (e.g., a base membrane, or a base membrane with attached amino polyol ligands) can have any useful bubble point, with examples of useful bubble points being in the range of from about 2 psi to about 400 psi, about 4 psi to about 200, or preferably about 4 psi to about 160 psi, when ethoxy-nonafluorobutane (HFE-7200) is used as the wetting solvent, and at a temperature of 22 degrees Celsius.

Another feature of a porous filter membrane is pore size of the pores of the membrane, e.g., average pore size. Pore size can be measured by known techniques such as by Mercury Porosimetry (MP), Scanning Electron Microscopy (SEM), Liquid Displacement (LLDP), or Atomic Force Microscopy (AFM).

A porous membrane as described (e.g., a base membrane, or a base membrane with attached amino polyol ligands) can have any pore size that will allow the filter membrane to be effective for performing as a filter membrane. The pore size can be correlated with bubble point determination. In some embodiments, porous filter membranes can have an average pore size in a range of from about 0.001 microns to about 5 or 10 microns, e.g., from 0.01 to 0.8 microns. The average pore size can be selected based on one or more factors that include: fluid flow rate, pressure, pressure drop considerations, viscosity considerations, impurities in the liquid to be treated (such as amount of metal impurities), and any particle size of the impurities.

Further, the disclosure contemplates use of polymeric base membranes or porous filter membranes that have generally uniform pore sizes resulting from a higher degree of pore symmetry throughout a thickness of a membrane, as well as membranes with non-uniform pore sizes (variable pore diameters) resulting from pore asymmetry. Pores can be isotropic or anisotropic, skinned or unskinned, symmetric or asymmetric, and any combination of these.

A porous polymer filter layer as described may have any porosity that will allow the porous polymer filter layer to be effective as described herein. Example porous polymer filter layers can have a relatively high porosity, for example a porosity of at least 60, 70 or 80 percent. As used herein, and in the art of porous bodies, a "porosity" of a porous body (also sometimes referred to as void fraction) is a measure of the void (i.e., "empty") space in the body as a percent of the total volume of the body and is calculated as a fraction of the volume of voids of the body over the total volume of the body. A body that has zero percent porosity is completely solid.

A porous membrane as described can be a sheet having any useful or desired geometric configuration suitable for use in a filter assembly used as described. Example porous membranes may have a shape selected from circular, semicircular, oval, semi-oval, or polygonal such as square, rectangular, hexagonal, or octagonal, etc. The porous membrane can be in the form of a flat sheet, a corrugated sheet, a pleated sheet, and a hollow fiber, among others.

A porous membrane as described can be in the form of a sheet having any useful thickness, e.g., a thickness in a range from 20 to 400 microns, e.g., from 40 or 80 to 100 or 200 microns.

As described herein, a porous filter membrane includes a base membrane, made of polymeric material, to which is chemically added amino polyol ligand that contains at least three hydroxyl groups (the "amino polyol" or "amino polyol ligand") at the surface of the base membrane, e.g., n-methylglucamine. Amino polyol ligands such as n-methylglucamine have been identified as being effective when placed at a surface of a filter medium for removing metal ions from source water (e.g., by a non-sieving filtration mechanism), in methods of forming purified (ultrapure) water by a step of filtering the source water with the filter medium.

The amino polyol ligands may be n-methylglucamine or another amino polyol ligand that is effective to remove metal ions from source water by filtration (e.g., by a non-sieving filtration mechanism). Specific examples of amino polyol ligands other than n-methylglucamine are described in United State patent publication 2020/0254398, the entirety of which is incorporated herein by reference.

As described in publication 2020/0254398, "amino polyol ligands" are chemical moieties that include a nitrogen and a polyol portion that contains three or more hydroxyl groups. Examples of amino polyols having three hydroxyl groups include 3-aminobutane-1,2,4-triol (threosaminitol), 4-aminobutane-1,2,3-triol, methylaminoglycerol (1-(methylamino) propane-1,2,3-triol), 2-(methylamino)propane-5-aminopentane-1,2,4-triol, and 5-aminopentane-1,2,3-triol.

Examples of amino polyols having four hydroxyl groups include 1-aminopentane-1,2,3,5-tetrol, 1-aminopentane-1, 1,2,2-tetrol, 1-amino-2,2-bis(hydroxymethyl)propane-1,3-diol, 1-aminohexane-2,3,4,5-tetrol, 1-(methylamino) hexane-2,3,4,5-tetrol, 2-aminopentane-1,2,4,5-tetrol, 2-aminopentane-1,2,3,4-tetrol, 3-aminopentane-1,2,4,5-tetrol, 4-aminopentane-1,1,2,3-tetrol, 4-aminopentane-1,2,3, 5-tetrol, 5-aminopentane-1,2,3,4-tetrol (ribamine); 1-amino-1-deoxypentitol), 5-aminopentane-1,1,1,5-tetrol, 6-aminohexane-1,2,3,4-tetrol, and 6-(methylamino)hexane-1,2,4,5-tetrol.

Examples of amino polyols having five hydroxyl groups include 1-aminopentane-1,2,3,4,5-pentol, 1-(methylamino)hexane-1,2,3,4,6-pentol, 5-(methylamino)hexane-1,2,3,4,6-pentol, 6-aminohexane-1,2,3,4,5-pentol, 5-(methylamino)hexane-1,2,3,4,6-pentol, 6-(methylamino)hexane-1,2,3,4,5-pentol (n-methylglucamine), 1-deoxy-1-(methylamino)-D-glucitol), and 6-(butylamino)hexane-1,2,3,4,5-pentol.

Examples of amino polyols having six hydroxyl groups include 6-(3-hydroxypropyl amino)hexane-1,2,3,4,5-pentol, 6-(2-hydroxyethylamino)hexane-1,2,3,4,5-pentol, 6-(2-hydroxyethylamino)hexane-1,2,3,4,5-pentol, 1-(propylamino)hexane-1,2,3,4,5,6-hexol, 6-(methylamino)hexane-1,1,2,3,4,5-hexol, 7-(methylamino)heptane-1,2,3,4,5,6-hexol, and 7-(propylamino)heptane-1,2,3,4,5,6-hexol.

Examples of amino polyols having seven hydroxyl groups include 6-(2,3-dihydroxypropylamino)hexane-1,2,3,4,5-pentol, 1-(ethylamino)hexane-1,1,2,3,4,5,6-heptol, 1-(2-hydroxyethylamino)hexane-1,2,3,4,5,6-hexol, and 8-(methylamino)octane-1,2,3,4,5,6,7-heptol.

Examples of amino polyols having more than seven hydroxyl groups include 6-(2,2,2-trihydroxyethylamino) hexane-1,2,3,4,5-pentol, 1-(2,3-dihydroxypropylamino)hexane-1,2,3,4,5,6-hexol, and 6-(2,3,4,5,6-pentahydroxyhexylamino)hexane-1,2,3,4,5-pentol.

The current disclosure also contemplates all enantiomers and stereoisomers of the amino polyols, such as described herein.

Example filter membranes, comprising a polymeric base membrane chemically modified to include amino polyol ligand, can have the amino polyol ligand attached in a useful manner to a surface of the base membrane. Examples include a porous polymeric base membrane made of polyolefin (e.g., polyethylene) that has been chemically modified by attachment of the amino polyol ligand directly to the base membrane polymer, i.e., to the polyolefin. The filter membrane can have a surface that contacts liquid source water during a filtering process, and the surface presents the attached amino polyol ligands to the source water. In some instances, an amino polyol ligand-modified surface of a filter membrane can be represented by the following formula: MF-N-P, wherein MF is material (e.g., polyolefin) of the filter, N is nitrogen, and P represents the polyol portion of the amino polyol ligand. In other instances, an amino polyol ligand-modified surface can be represented by MF-L-N-P, wherein MF, N, and P have the definitions herein, and L is a chemical linker linking the amino polyol to filter material. Example amino polyol ligands are chemically attached (i.e., covalently bonded) to polymer of the base membrane. In other embodiments, an amino polyol ligand-modified surface can be represented by Poly-N-P, wherein N and P have the definitions herein and Poly is a polymeric backbone to which the polyol is attached. For this embodiment, the filter material is internally coated by a modified polymer coating, which may also be crosslinked.

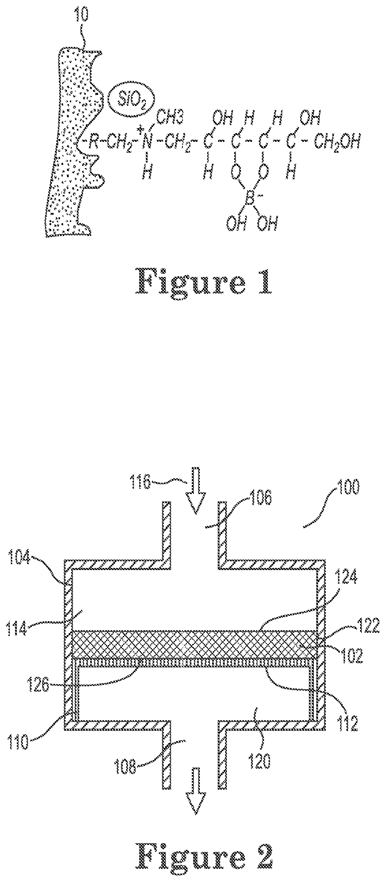

Shown at Figure 1 is an example of an amino polyol ligand (n-methylglucamine, as illustrated) attached directly to polymer (e.g., polyolefin) of a base membrane 10.

A porous filter membrane can be present as a part of a filter assembly that includes a housing that contains the filter membrane and that causes a liquid to pass through the membrane for a filtering step. The filter membrane may be included as part of a filter cartridge or other filter product or assembly that acts as the housing. The housing, containing the filter cartridge and filter membrane, is fluidically sealed, aside from inlet and outlet ports, and able to allow liquid to pass through the inlet port, through the membrane contained in the housing without bypassing the membrane, and then exit the housing through the outlet port. A housing can be included as a component of a larger filtration or water purification system that may additionally include multiple filtering or purification devices in line (in series) with one another.

A larger filtering system will include a filter membrane as described herein, e.g., as part of a filter assembly or as part of a filter cartridge, in a flow path of a liquid (source water) to cause at least a portion of the flow of the liquid to pass through the filter membrane, so that the filter membrane removes an amount of impurities or contaminants from the liquid. In specific, source water passed through a filter membrane as described herein may be effective to remove impurities selected from dissolved metals and metal ions (e.g., dissolved iron, titanium, and boron), dissolved silica, and particles of silica (colloidal or solid particles).

The structure of a filter assembly or filter cartridge may include one or more of various additional materials and structures that support the filter membrane within the filter assembly or filter cartridge to cause fluid to flow from a filter inlet, through the filter material (e.g., filter membrane), and through a filter outlet. The filter membrane supported by the filter assembly or filter cartridge can be in any useful shape, e.g., a pleated cylinder, a cylindrical pad, one or more non-pleated (flat) cylindrical sheets, a pleated sheet, among others.

Referring to Figure 2, illustrated is a schematic representation of an example of a filter apparatus, and a method of removing metal contaminants from flowing liquid source water, wherein the source water passes through a porous polymeric filter membrane that includes amino polyol ligand. As shown at Figure 2, filter apparatus 100 includes porous polymeric filter membrane 102, which includes amine polyol ligand attached to surfaces of a porous polymeric base membrane. Filter apparatus 100 includes housing 104, which provides an external structure of filter apparatus 100 and fluidically seals an internal portion of the filter that contains filter membrane 102. Housing 104 can be any shape and size, such as cylindrical, polygonal, etc.

Filter apparatus 100 includes inlet port 106 to receive source water to be filtered. Inlet port 106 can be configured to be connected to a fluid supply line that supplies a flow of source water (not shown). As such, inlet port 106 can include a valve, a gasket, etc. (not shown) to facilitate connection to a fluid supply. The source water can flow through inlet port 106 in direction indicated by arrow 116, and into headspace 114 defined by an input-facing surface 124 of porous polymeric filter membrane 102, the internal surface of the housing 104, and the inlet port 106.

The internal portion of filter apparatus 100 contains filter membrane 102 in any suitable placement or arrangement, with Figure 2 showing the filter membrane 102 having a disc-like shape (a cross-sectional view is shown). One edge 122 of filter membrane 102, such as the outer circumference of the membrane, can be in contact with or otherwise can form a liquid-tight seal with the inner surface of the housing 104. Filter membrane 102 also includes input-facing surface 124, which first contacts the source water, and output-facing surface 126, from which treated (filtered) source water with reduced amounts of contaminants (metal, metal ions, etc.) flows.

Filter apparatus 100 optionally includes one or more structures that support filter membrane 102 at the interior of the filter apparatus. Any arrangement for supporting filter membrane 102 may be used, such as a frame, frame, bracket, clip, web, net, cartridge, or cage, or adhesive, may be useful to support a membrane 102. As shown at Figure 2, filter apparatus 100 includes a frame having frame portions 110 and 112, with frame portion 110 in contact with the inner surface of the housing 104, which is attached to portion 112. Portion 112 can be in contact with the output-facing surface 124 of the membrane 102 and can provide support to membrane 102 during filtering. Frame portion 112 can have a grid-like structure to freely allow filtered liquid to pass into the backspace 120 of the interior of filter apparatus 100, while still providing structural support of polymeric porous filter membrane 102 under fluidic pressure caused by a flow of source water through membrane 102.

In use, a liquid such as source water enters filter apparatus 100 through inlet port 106 in direction indicated by arrow 116, and then fills the headspace 114 within the filter apparatus 100. Sufficient fluidic pressure is applied to cause the source water to move through the porous polymeric filter membrane (102) at a desired flow rate. After passing through filter membrane 102, the source water enters backspace 120 and then exits housing 104 through outlet 108.

A filter membrane as described, or a composite ("stacked") filter membrane that includes at least one filter membrane as described (see below), during use in a filtration process, should allow for a useful flow rate (volume per time) of fluid (e.g., source water) through the filter membrane. A useful rate of fluid flow is one that allows for efficient (preferably economically efficient) operation of a filtration system, with the filter membrane, for supplying equipment such as semiconductor processing equipment with a needed flow (volume per time) of purified water.

Exemplary flow rates for porous membranes as described may be in a range of about 0.1 L/min to about 40 L/min, or more preferably about 10 L/min to about 30 L/min (liters per minute). Alternatively, flow rate of fluid through a porous membrane may be expressed in terms of the amount of liquid flowed per area of the filter per time and pressure (e.g., Liter/m$^2$/h = LMH), such as about 100 LMH/bar to about 30,000 LMH/bar, or more preferably about 5,000 LMH/bar to about 15,000 LMH/bar.

According to certain example filter membranes as described, the filter membrane may be one layer of a composite membrane (i.e., a "stacked membrane") that includes two or more filter membranes that are effective to remove the same or different contaminants from source water flowing through the membranes. A composite membrane can include at least one filter membrane that as described, made of base polymer with attached amino polyol ligand. This membrane will effectively remove dissolved metal-containing contaminants (e.g., dissolved metals, metal ions, or metal compounds) such as boron as well as contaminants like silica from a flow of source water through the filter membrane, e.g., by a non-sieving filtration mechanism. A second membrane may be different from the first membrane and may be effective to remove other (e.g., non-metal or non-dissolved metal or metal ion) types of contaminants from source water, e.g., may be effective to remove solid particulate contaminants such as silica ($SiO_2$) particles.

Porous polymeric filter membranes useful to remove solid particulate contaminants such as silica particles are known and may be in a form (for example) of a polymer filter membrane described herein that does not require the amino polyol ligand. Generally, a useful filter membrane may be one that is microporous (e.g., has an average pore size in a range from 10 nanometers to 10 microns), and made of a useful polymer such as a polysulfone, a polyolefin (e.g., polyethylene), or a fluoropolymer (e.g., fluorinated polyolefin) (without limitation). Example membranes may have a bubble point in a range of about 10 to 100, e.g., 40 to 60 psi (measured with HFE), and may be effective to remove silica particles by a combination of a sieving mechanism and a non-sieving mechanism.

A composite membrane may also contain one or more additional layers that act to maintain the structure of the composite, i.e., one or more support layers. A support layer is a porous membrane or film that is supportively attached to a composite membrane to provide support for the composite membrane, while still allowing source water to flow through the membrane from one side to the other. Example support layers are not required to perform any filtering function, and may have pores or openings that are substantially larger than those of a filter membrane of the composite, such that the resistance to flow of source water through the support layer is less than the resistance to flow of a filter membrane of the composite membrane.

Example support membranes may include macroporous polymeric films made of any useful polymer, having a structure and thickness to add support to the to the composite. The pores may be openings or fenestrations that are visible without magnification. The polymer may be any polymer that is sufficiently structural and non-chemically reactive (inert), such as polyolefin or modified polyolefin polymers, e.g., high density polyolefin, polypropylene, perfluoro alkoxyl, etc.

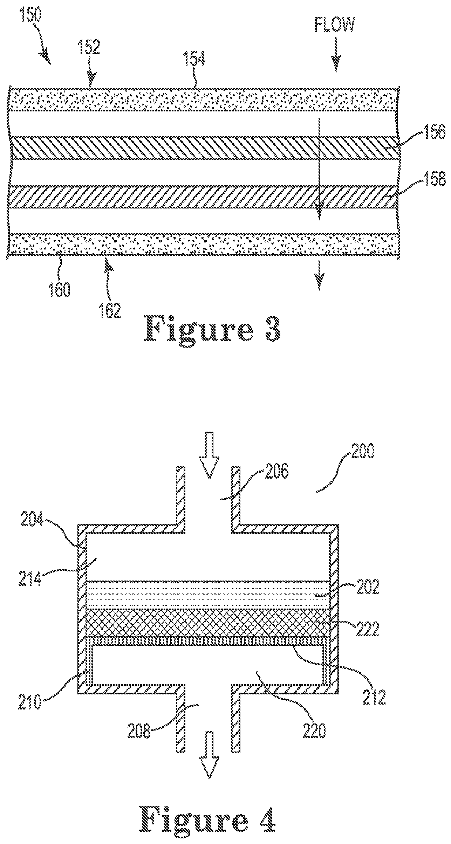

Figure 3 shows a schematic illustration of one single example of a composite membrane of the present description. As shown schematically, composite membrane 150 includes upstream surface 152, downstream surface 162, upstream non-filtering support membrane 154, filter membrane 156, an additional filter membrane 158, and downstream non-filtering support membrane 160.

Upstream non-filtering support membrane 154 is a non-filtering membrane body that provides physical and structural support for composite membrane 150. Upstream support membrane 154 is porous and allows flow of source water through the membrane with relatively low resistance compared to a total resistance to flow of the composite. Filter membrane 156 is a filter membrane as described, that includes a porous polymeric base membrane as described with chemically attached amino polyol ligands. Filter membrane 158 is a membrane adapted to perform a function of filtering contaminants that include solid particles, such as silica particles. Downstream support membrane 160 is porous and allows flow of source water through the membrane with relatively low resistance compared to a total resistance to flow of the composite.

In use, source water enters upstream surface 152, passes through upstream non-filtering support membrane 154, and contacts and passes through filter membrane 156, which includes a porous polymeric base membrane as described with chemically attached amino polyol ligands. Passing the source water through filter membrane 156 allows membrane 156 to remove dissolved contaminants such as dissolved metals from the source water, e.g., by a non-sieving filter mechanism. The source water next passes through filter membrane 158, which can remove particle contaminants such as silica particles from the source water, by a sieving filtration mechanism. The source water then passes through downstream non-filtering support membrane 160.

In another example, shown in Figure 4, filter apparatus 200 includes a first porous polymeric membrane 202 and a second porous polymeric membrane 222. The two polymeric membranes 202, 222 may be included in a composite membrane or may be separate membranes arranged in series with the output-facing surface of the first porous polymeric membrane 202 in direct contact with the input-facing surface of the second porous polymeric membrane 222. At least one of first and second porous polymeric membranes 202, 222 has attached thereto amino polyol ligand as described. Filter apparatus 200 includes housing 204, inlet port 206, headspace 214, frame having frame portions 210 and 212 to support the membranes during filtering, a backspace 220, and an outlet port 208.

According to one single example of a useful combination of membranes 202 and 222, filter membrane 222 can be a filter membrane as described, containing a porous polymeric base membrane and amino polyol ligand. This membrane will effectively remove amounts of dissolved metals, metal ions, or metal-containing compounds such as boron from a flow of source water through filter membrane 222, e.g., by a non-sieving filtration mechanism. Membrane 202 can be a porous polymeric membrane that is effective to remove other (non-dissolved metal or metal ion) contaminants from source water, e.g., that is effective to remove solid particulate contaminants such as silica ($SiO_2$) particles.

Also shown at Figure 4, filter apparatus 200 includes a frame having frame portions 210 and 212, with frame portion 210 in contact with the inner surface of the housing 204, which is attached to portion 212. Portion 212 can be in contact with the output-facing surface 224 of membrane 222 and can provide support to membranes 202 and 222 during filtering.

In example filtration systems, a filter membrane as described or a filter apparatus that includes a filter membrane as described can be useful in a larger filtration system that contains, additionally, one or more additional filtering or purification devices that also remove impurities from a flow of source water that is also filtered through the filter membrane of the description (containing base membrane and attached amino polyol ligand). The one or more additional filtering or purification devices may include, for example, an ion-exchange system that removes amounts of trace impurities from the source water either before or after the source water passes through the filter membrane of the description (containing base membrane and attached amino polyol ligand), a UV-irradiation device, a reverse osmosis device, among others.

Ion-exchange resins are known for various specific applications of removing impurities from liquids. These include, generally, for industrial water treatment, power generation, pharmaceutical applications, wastewater and recovery, and for use in preparing ultrapure water. Examples of ion-exchange resins that are specifically indicated for use in preparing or processing ultrapure water include resins that are made of styrene-based polymer (e.g., polystyrene sulfonate). The ion-exchange resin may be of a type that is referred to as a "strongly acidic cation exchange resin," a "strongly basic anion exchange resin," or a mixed type that includes both of these. The ion-exchange resin may be in the form of a gel, may be porous or non-porous, or may be in the form of solid particles (e.g., beads or pellets). Some ion-exchange resins can be regenerated after a period of use (are "regenerable") and other resins cannot be regenerated.

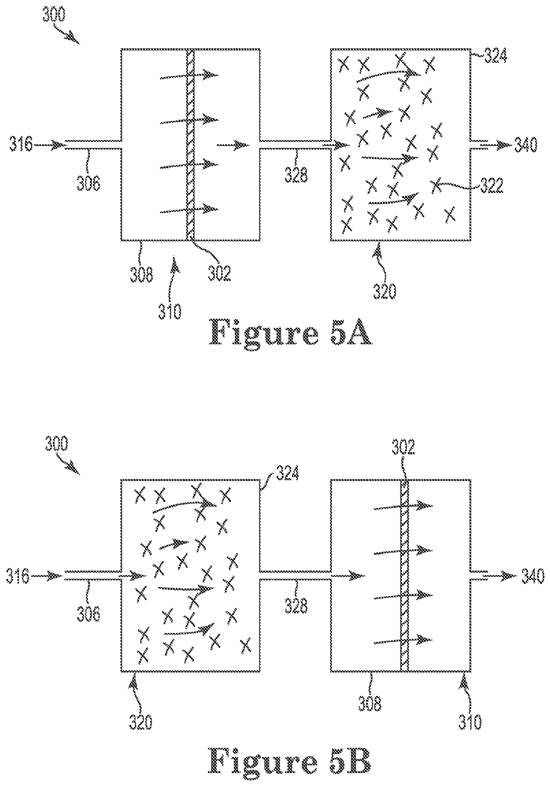

As shown at Figure 5A, a filtration system 300 includes filter apparatus 310, which includes housing 308 that contains and encloses porous filter membrane 302 as described, containing a base membrane and attached amino polyol ligand. In some embodiments, a composite membrane such as composite membrane 150 described above may be used as the filter membrane placed in filter apparatus 310 shown in Figures 5A and 5B. In series with and downstream of filter apparatus 310 is filter apparatus 320, which includes ion-exchange resin 322. During operation of filtration system 300, source water 316 flows into inlet 306 of filter apparatus 310, then passes through filter membrane 302, with metal-containing contaminants being removed from the source water as the source water passes through membrane 302. The filtered source water then passes through conduit 328 and into housing 324 of filter apparatus 320. The source water passes through, past, or between, solid particles (e.g., beads, pellets) of ion-exchange resin 322, causing additional amounts of impurities to be removed from the source water. Example ion-exchange resins may be useful to remove amounts of dissolved metal contaminants such as dissolved iron, titanium, and boron, as well as other metals (which may be anionic, cationic, or neutral in charge). After passing through filter apparatus 320 and ion exchange resin 322, the source water exits housing 324 as purified water 340, which may be considered ultrapurified water.

Figure 5B shows an alternate filtration system 300 that includes filter apparatus 310 and filter apparatus 320, in an opposite order. In figure 5B, the source water first passes through filter apparatus 320, and subsequently passes through filter apparatus 310.

A filter membrane of the disclosure or a composite membrane that includes such a filter membrane may be useful for filtering a source of water ("source water") that includes a relatively low level of impurities, e.g., that is already substantially pure or that has previously been processed by a filtration or purification step. In example methods, source water may be provided that has been previously processed to remove impurities, and the source water may be processed using a filter membrane as described to remove an amount of remaining impurities such as dissolved metal impurities, to produce still further purified water (i.e., "purified water" or "ultrapure water"). In particular, a porous polymeric filter membrane as described may be useful to remove one or more dissolved and/or suspended metal-containing impurities from source water that is flowed through the membrane. Solid particle impurities may be removed from the source water by a sieving mechanism or by a non-sieving mechanism, or both, and dissolved metal impurities may be removed from the source water by a non-sieving mechanism that involves binding of dissolved impurities to hydroxyl groups of amino polyol ligands of the filter membrane. Relatively large metal-containing particles can be trapped by the filter by size restriction according to pore size, and metal ions that otherwise are small enough to pass through the pores of the filter membrane are captured by chemical interaction with the amino polyol ligand that is attached to an immobilized at the membrane surface.

In a specific method, a filter membrane as described, that includes amino polyol ligand attached to a base membrane, can be used to remove metal contaminants (dissolved metals and metal ions) from source water that contains levels of these materials that may be desirably reduced, e.g., to use the water in a desired manufacturing process, e.g., a semiconductor or microelectronic device manufacturing process. Metal contaminants ("impurities") include dissolved metals and metal compounds such as boron, iron, titanium, silicon, other dissolved metals, particles of metal compounds (e.g., colloidal or solid silica), and may be charged (ionic, e.g., anionic or cationic) or non-charged (non-ionic, neutrally charged).

The source water can be water that has been previously processed to remove contaminants, particles, sediment, as a step toward processing the water to a desired high or very high level of purity, e.g., to process the water to water referred to as ultrapure water.

Ultrapure water is produced by treating a source of stock (non-purified) water, such as river water, groundwater, industrial water, or the like, with a "pretreatment" process to remove amounts of suspended matter and organic substances in the stock water, to produce what is referred to as "primary pure water." The primary pure water may exhibit one or more physical properties or impurity levels of ultrapure water (see Table 1, below), but may also benefit from additional treatment to remove a portion of remaining impurities such as dissolved metals or dissolved, solid, or colloidal silica. The primary pure water may be treated by one or more additional filtration or purification steps to remove a very high degree of remaining impurities from the water.

In subsequent steps of preparing ultrapure water, primary pure water can be treated by any one or more steps of ultraviolet irradiation, ion-exchange, electrodeionization (EDI), reverse osmosis (RO), degasification, ultrafiltration (using a membrane), and the like, to remove amounts of trace impurities such as trace amounts of ions, organic substances, fine particles, dissolved gases, etc., that may be present in the primary pure water.

Impurity content of ultrapure water can be measured in terms of total organic carbon content (TOC), resistivity and conductivity, total solid particle content, pH, and specialty measurements of specific ions.

A water source as described herein may be a source of water referred to as "primary pure water," which is water that has undergone at least one purification (e.g., filtration) step toward preparing ultrapure water. Alternately, a water source may be a source of water that has undergone a first purification step to form "primary pure water" as well as one or more additional purification steps selected from ultraviolet irradiation, ion-exchange, reverse osmosis, ultrafiltration (using a membrane), or two or more of these. Such a water source may still contain trace amounts of dissolved metal-containing contaminants such as dissolved boron, iron, titanium, or silicon, and may also contain trace or small amounts of solid particles such as silica particles. A filter membrane, filter apparatus, or filtering system of the present description is useful to remove at least a portion of the remaining contaminants.

A method as described can be effective to produce ultrapure water that exhibits one or more of the following levels of impurities:

Table 1

| Test Parameter | Parameter |
| --- | --- |
| Resistivity (25°C) | > 18.18 MΩ·cm |
| Total Organic Carbon | < 1 $\mu$g/L |
| On-line dissolved oxygen | < 10 $\mu$g/L |
| On-line particles - Non - Electrically active particles (>0.05 $\mu$m) | < 140 particles/L |
| On-line particles - Electrically active particles (>0.05 $\mu$m) | < 30 particles/L |
| Non-Volatile Residue | 0.1 $\mu$g/L |
| Silica (total and dissolved) | 0.05 $\mu$g/L |
| Metals (by ICP/MS) | |
| 22 Most common elements (see F63-0213 for details) | < 0.001-0.01 $\mu$g/L |
| Boron | < 0.05 $\mu$g/L |
| Ions (by IC) | |
| 7 Major Anions and ammonium (see F63-0213 for details) | 0.05 $\mu$g/L |
| Microbiological - Bacteria | < 1 CFU/100 mL |

Commonly for use in semiconductor applications, ultrapure water is used with an individual metal impurity concentration of 0.01 $\mu$g/L or below. More recently, even higher levels of purity may be required, such as an individual metal impurity concentration of 1 ng/L or below.

A filter membrane as described, in one example, may be useful to supply purified water (e.g., ultrapure water) to a semiconductor or microelectronic device processing system, for example as rinse water to clean or prepare surfaces of a microelectronic device substrate or a semiconductor device substrate, during manufacturing.

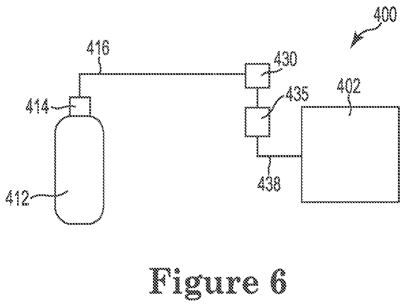

Figure 6 illustrates semiconductor fabrication system 400 that includes chamber 402 in which a microelectronic component such as an integrated circuit or semiconductor material is fabricated. Chamber 402 is able to receive purified water (e.g., ultrapure water) for processing (e.g., washing) a microelectronic device or semiconductor substrate contained in chamber 402. The purified water can be provided from source water contained and delivered from source 412, further processed using filter 435. Movement of source water through conduit 416 can be affected by pump 414. Valve 430 is in fluidic communication with conduit 416 and can regulate flow of the source water into filter 435 and subsequently into chamber 402 through conduit 438. Filter 435 can include a filter membrane as described herein, including a base membrane with amino polyol ligand attached to the base membrane. One or more additional filtering or purification devices in series with filter 435 may be included to remove impurities different or in addition to the impurities removed by filter 435. Optional additional filter devices (not shown) may be one or more of an ion-exchange resin, ultraviolet irradiation equipment, reverse osmosis equipment, or the like, which may be upstream or downstream from filter 435.

In use, source water flows from source 412, through pump 430, through filter 435, which removes an amount of trace contaminants such as dissolved metal-containing contaminants (e.g., boron, silicon, etc.). The source water can also flow through an optional ion-exchange system, and the water that is filtered by filter 435 and optional ion-exchange system can be used in a processing step performed within chamber 402, such as for washing a surface of a microelectronic device or semiconductor device substrate.

## EXAMPLES

Particle Retention Testing

Filter membranes of the present description were tested for filtering performance, including particle retention. Particle retention can be evaluated by measuring the number of test particles removed from a fluid stream by a membrane placed in the fluid stream. By one method, particle retention can be measured by passing a flow of test feed liquid that contains a known amount (concentration) of test particles (a collection of particles of known composition, average size, and size distribution) through the membrane at a constant flow of the test feed liquid and collecting the permeate to measure particle content of the permeate. The test may be performed at a range of levels of particle coverage of the filter (referred to as "filter coverage," e.g., 0.05 monolayers, 0.1 monolayers, and 0.2 monolayers coverage, i.e., 5 percent filter coverage, 10 percent filter coverage, and 20 percent filter coverage). The concentration of the test particles in the filtrate (or "permeate") can be calculated from the absorbance of the permeate. Particle retention is then calculated using the following equation, based on a concentration of particles in the feed ([feed]) relative to the concentration of particles in the filtrate ([filtrate]):

$$Particle\ Retention = ([feed]-[filtrate])/[feed] \times 100$$

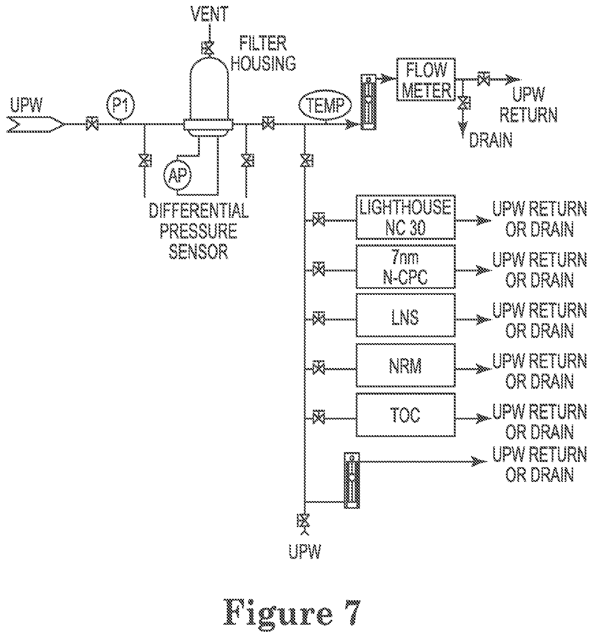

Particle retention testing of filter membranes of the present description was performed using a SEMI C79 test method (August 2019). Figure 7 is a schematic diagram of an effective test method (see https://store-us.semi.org/products/c07900-semi-c79-guide-to-evaluate-the-efficacy-of-sub-15-nm-filters-used-in-ultrapure-water-upw-distribution-systems).
With reference to Figure 7, tests were performed using the following materials, equipment, and conditions:

Flush flow rate: 10 liters per minute (LPM)
Flow rate during test: based on membrane surface area (in our testing: 11.2 LPM)
Particle Type: $SiO_2$
Particle Size: 6-32 nm (Polydisperse)
Measurement tool: DMA / CPC based LNS
Challenge filter with target challenge of 1.5E9 particles $\geq$ 6 nm
DMA = Differential Mobility Analyzer
CPC = Condensation Particle Counter
LNS = Liquid NanoSizer

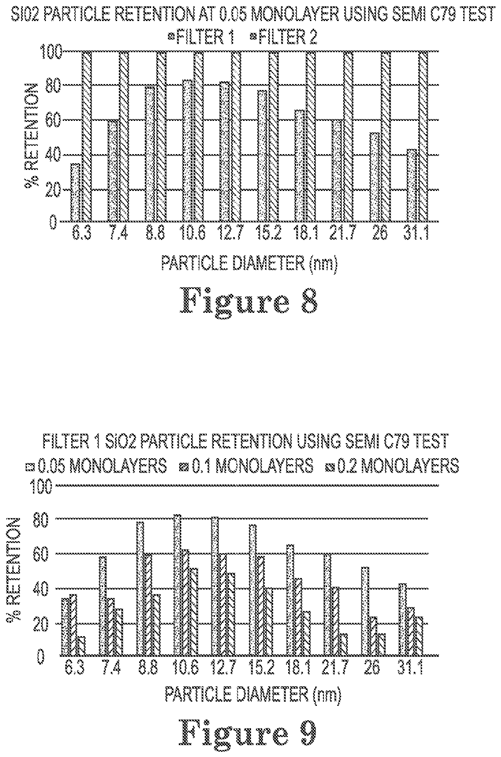

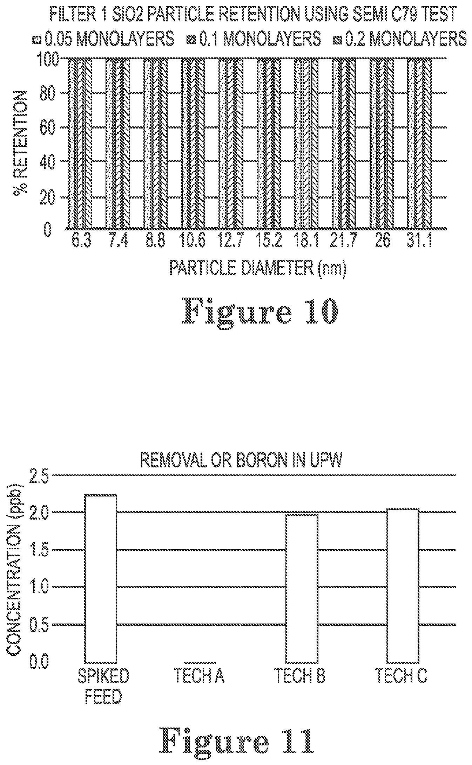

Two filters were tested: Filter 1 (comparative) and Filter 2 (reference)
Filter 1 was prepared from a polytetrafluoroethylene (PTFE) base membrane having nonhomogeneous morphology and is not processed to include any amino polyol ligands, such as a chemically attached quaternary ammonium. Properties of filter 1 include: bubble Point: 30 to 60 psi, dye binding capacity < 0.1 $\mu g/cm^2$.
Filter 2 is the base membrane of Filter 1 modified to include quaternary ammonium attached at the polymer surface. Properties of Filter 2 include: bubble point: 30 to 60 psi, dye binding capacity (DBC): at least 10 $\mu g/cm^2$.
Results of the tests are shown at Figures 8, 9, and 10.
As shown at Figure 8, retention of test particles by comparative Filter 1 over a range of particle diameters is in a range well below 100 percent for all diameters, while retention of test particles by reference Filter 2 over the range of particle diameters at 100 percent for all diameters.
As shown at Figure 9, retention of test particles by comparative Filter 1 over a range of particle diameters and a range of filter coverage (percent monolayer) is in a range well below 100 percent for all diameters and amounts of filter coverage. In comparison, Figure 10 shows that for reference Filter 2, particle retention is 100 percent for all particle diameters and over the range of filter coverage (percent monolayer).

Static Testing for Boron Removal

Membranes of the present description were tested for their ability to remove boron under static soaking (non-flow) conditions. By this test, a sample of a filter membrane is exposed to a known volume of liquid test solution ("spiked feed") that contains a known amount (concentration) of dissolved boron. The sample filter membrane is allowed to contact the spiked feed (is submersed in the spiked feed) for a time that allows boron from the spiked feed to be removed from the spiked feed by a non-sieving filtration mechanism, e.g., by electrostatic or chemical attraction, adsorption, or another type of attachment or attraction of the boron to a surface of the sample filter membrane. After an amount of time to allow for non-sieving attraction of the boron to the filter membrane, the concentration of boron in the liquid test solution contacted with the filter membrane sample is measured. A reduction in the concentration of boron in the liquid test solution indicates the amount of boron removed by the sample filter membrane.

Three sample filter membranes were tested: Tech A (reference), Tech B (comparative, non-inventive), and Tech C (comparative, non-inventive).

The Tech A membrane was prepared from a base membrane of polyethylene ultrahigh molecular weight polyethylene (UPE) having substantially homogeneous morphology and an average pore size of 0.2 um, a thickness of 80 micron. The membrane was surface modified with a stable coating of N-methyl-D-glucamine. The amount of N-methyl-D-glucamine modification was quantified by performing the DBC test which is indicative of the amount of charged amines accessible on the surface of the membrane. The DBC of Tech A was determined to be 120 $\mu$g/cm$^2$.

The Tech B membrane was prepared from a PTFE membrane surface modified with a stable coating of quaternary ammonium having substantially homogeneous morphology and an average pore size of 30 nm, a thickness of 25 -60 micron, and DBC of at least 10 $\mu$g/cm$^2$.

Tech C was an ultrahigh molecular weight polyethylene membrane modified with sulphonic acid functionality, having substantially homogeneous morphology and an average pore size of 0.2 micron, and a thickness of 80 micron. The UPE membrane modified with sulphonic acid functionality exhibits an ion-exchange capacity of 4.2 meq/m$^2$.

The size of the sample filter membrane was 47 millimeters circle coupon. The volume of test solution was 25 milliliters. The amount the sample filter membrane was submersed in the test solution: 16 hours. Concentration of boron in the liquid test solution was measured using ICP-MS.

Results are shown at Figure 11. As shown, the reference filter membrane (Tech A) removed essentially the entire amount of dissolved boron, while the comparative, non-inventive filter membranes (Tech B and Tech C) removed only a small portion of the dissolved boron in the test solution.

<u>Determination of Dye Binding Capacity of Positively Charged Membrane with N-methyl-D-glucamine attached.</u>

The example demonstrates how the degree of positive charge present on a porous membrane can be approximated by measuring the uptake of the negatively charged dye molecule Ponceau S.

This method is used to measure the amount of charge applied to the surface modified UPE membrane (Tech A). First, a coupon of known area is placed in a 50 mL conical tube containing 50 mL of a dilute (0.005% weight percentage) Ponceau S Red dye (Sigma Aldrich) feed solution in 50% isopropanol and immediately the tube is capped and rotated for 16 hours. After the 16 hour rotation, the membrane coupon is removed from the Ponceau S solution. By determining the difference in UV absorbance from the original solution in comparison to the rotated solutions, a final "Dye-Binding Capacity" (DBC) can be calculated and expressed in $\mu$g/cm$^2$. This number is an approximation of the level of charged functional groups on the surface of a membrane and is correlated to the level of membrane ion-exchange capacity. In the case where there is a charged amine due to the presence of an attached N-methyl-D-glucamine, the DBC is indicative of the amount of N-methyl-D-glucamine that is attached to the coating on the membrane surface. The Ponceau S DBC for an unmodified UPE membrane (base membrane) was 0.00 $\mu$g/cm$^2$, the DBC for the N-methyl-D-glucamine surface-modified membrane was determined to be 120 $\mu$g/cm$^2$. The same method can be useful for determining DBC of other membranes of these Examples.

<u>Dynamic Testing for Boron Removal</u>

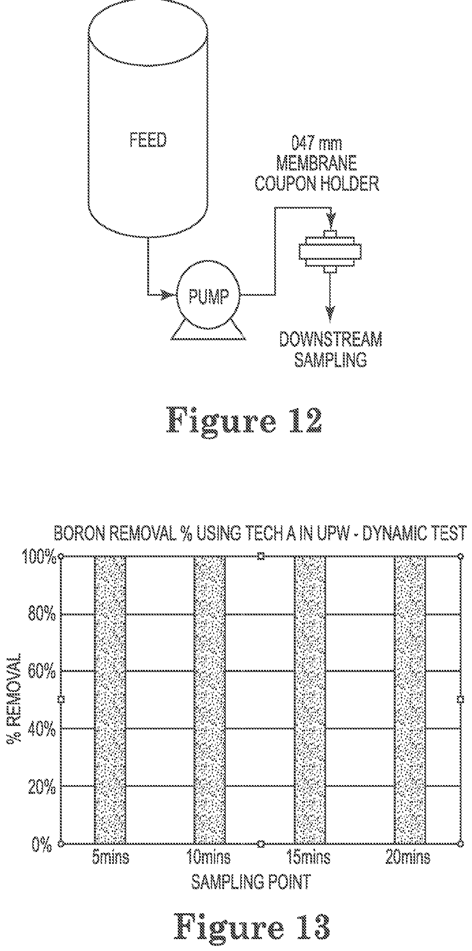

The Tech A membrane was tested for capacity to remove dissolved metals, including boron, under dynamic conditions. By this test, a sample of a filter membrane (coupon) is held in a flow of liquid test solution ("feed") that contains known amounts (concentrations) of dissolved metals, including boron. The test solution is flowed through the sample filter membrane for a set amount of time. See Figure 12. After selected amounts of time, a sample of the filtrate is taken and the concentration of dissolved metals in the filtrate is measured. A reduction in the concentration of dissolved metal in the filtrate relative to the amount of the dissolved metal in the test solution indicates the amount of the dissolved metal that is removed by the sample filter membrane.

With reference to Figure 13, tests were performed using the following materials, equipment, and conditions:

Flow rate: 10 mL/min (single pass, monitored and controlled)
Membrane format: Ø47 mm coupon

Test Metals and feed concentrations:

B: 5 parts per billion (ppb)
Ti: 3.6 parts per billion (ppb) (high challenge)
Fe: 6.4 parts per billion (ppb) (high challenge)
Fe: 0.68 parts per billion (ppb) (low challenge)
Ni: 0.13 parts per billion (ppb) (low challenge)
Cu: 0.13 parts per billion (ppb) (low challenge)

Sampling method: Time based
Sampling location: Downstream of membrane
Measurement tool: ICP-MS
Concentrations of dissolved metals in the test solution and filtrate were measured using ICP-MS.

Results for effectiveness in removing dissolved boron are shown at Figure 13. As shown, the reference filter membrane (Tech A) removed essentially the entire amount of dissolved boron at sample times of 5, 10, 15, and 20 minutes.

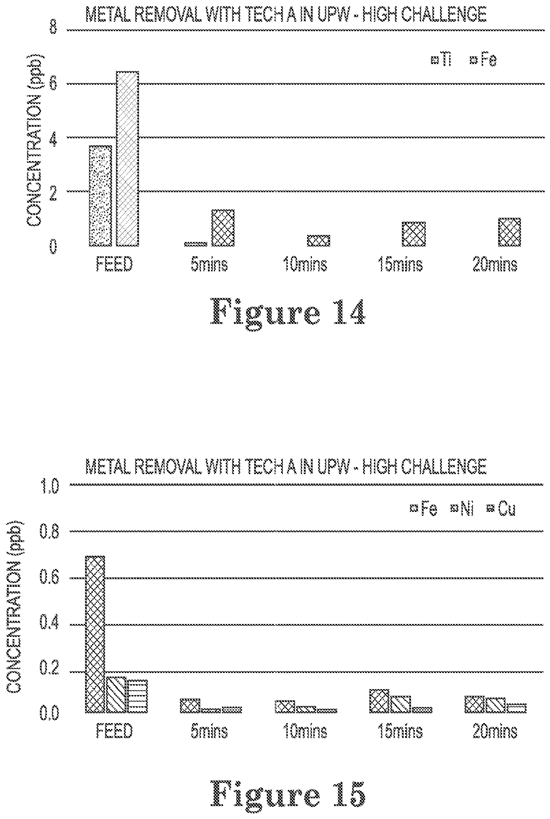

Results for effectiveness in removing other dissolved metals at a "high challenge" feed concentration and "low challenge" feed concentration are shown at Figures 14 and 15, respectively. The testing shows that the Tech A filter membrane has the capability to remove substantial amounts of these metals from a test solution at both high challenge and low challenge conditions (>80% Fe, >95% Ti, >50% Ni, >60% Cu).

Dynamic Testing of Boron Capacity

Using a similar Dynamic Testing arrangement and test conditions, etc., the Technology A (Tech A) sample filter membrane was tested for an extended single pass period to assess the capacity of the Tech A filter membrane to contain boron removed from a test solution.

Flow rate: 10 mL/min (single pass, monitored and controlled)
Membrane format: 90 millimeter membrane disc
Boron feed concentration: 5 parts per billion (ppb)
Sampling method: Time based
Sampling location: Downstream of membrane
Measurement tool: ICP-MS
Concentrations of dissolved metals in the test solution and filtrate were measured assessed using ICP-MS.

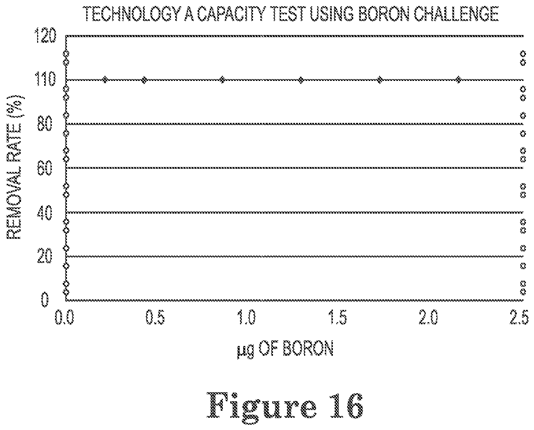

Results of capacity for removing and containing boron from a test solution are shown at Figure 16. The testing shows that the Tech A filter membrane is capable of removing 100 percent of boron from the test solution even after 2 micrograms of boron had passed through the filter membrane. This is comparable to about 800 micrograms boron being removed using a 10 inch filter cartridge.

Having thus described several illustrative embodiments of the present disclosure, those of skill in the art will readily appreciate that yet other embodiments may be made and used within the scope of the claims hereto attached. Numerous advantages of the disclosure covered by this document have been set forth in the foregoing description. It will be understood, however, that this disclosure is, in many respects, only illustrative. The disclosure's scope is, of course, defined in the language in which the appended claims are expressed.

**Claims**

1. A system useful for removing an impurity from a flow of source water, the system comprising:

a composite polymeric filter membrane comprising: a porous polymeric base membrane with an amino polyol ligand having three or more hydroxyl groups attached to the polymeric base membrane, and a microporous polymeric filter membrane for removing particulates, and
an ion-exchange resin.

2. The system of claim 1, wherein: the amino polyol ligand is N-methyl-D-glucamine.

3. The system of claim 1 or claim 2, wherein the polymeric base membrane comprises a polyolefin or a halogenated polymer.

4. The system of any preceding claim, wherein the polymeric base membrane comprises polyethylene optionally ultra-high molecular weight polyethylene.

5. The system of any preceding claim, wherein the porous polymeric base membrane has a pore size **characterized by** a bubble point in a range from 27579 Pa to 1.10316 MPa (4 psi to 160 psi), the bubble point measured using ethoxy-nonafluorobutane (HFE-7200) is used as the wetting solvent at a temperature of 22 °C.

6. The system of any preceding claim, wherein the microporous polymeric filter membrane is free from said amino polyol ligand.

7. The system of any preceding claim, wherein the microporous polymeric filter membrane has a bubble point in a range of about 6894.76 Pa to 0.689476 MPa (10 psi to 100 psi), the bubble point measured using ethoxy-nonafluorobutane (HFE 7200) as wetting agent at a temperature of 20-25°C.

8. The system of any preceding claim, wherein:

   the system is configured so the flow of source water passes first through the ion exchange resin, and second through the composite polymeric filter membrane, or
   the system is configured so the flow of source water passes first through the composite polymeric filter membrane, and second through the ion exchange resin.

9. A method of removing an impurity from a flow of source water, the method comprising flowing the source water through a polymeric filter membrane that comprises:

   a first porous polymeric base membrane, and
   amino polyol ligand having three or more hydroxyl groups attached to the polymeric base membrane,

      removing silica particles from the source water by passing the source water through a second porous polymeric filter membrane that is effective to remove silica particles, before or after passing the source water through the first polymeric filter membrane; and
      passing the flow of source water through an ion exchange resin before or after passing the flow of source water through the first polymeric filter membrane.

10. The method of claim 9, wherein:

    the amino polyol ligand is N-methyl-D-glucamine, or
    the polymeric base membrane comprises polyethylene, or
    both.

11. The method of any of claim 9 10, wherein the source water exhibits one or more of:

    resistivity: > 18.18 MΩ·cm,
    total organic carbon: < 1 $\mu$g/L,
    on-line dissolved oxygen: < 10 $\mu$g/L,
    bacteria: < 1 CFU/100 mL.

12. The method of any of claims 9 through 11, wherein the impurity is dissolved metal or boron, and the method produces water having:

    an individual metal impurity concentration of 0.1 $\mu$g/L or below,
    a boron concentration of 0.1 $\mu$g/L or below, or
    both.

**Patentansprüche**

1. System, das zum Entfernen einer Verunreinigung aus einem Quellwasserstrom nützlich ist, wobei das System umfasst:

   eine zusammengesetzte polymere Filtermembran, umfassend: eine poröse polymere Basismembran mit einem Aminopolyol-Liganden, der drei oder mehr Hydroxylgruppen aufweist, die an die polymere Basismembran gebunden sind, und eine mikroporöse polymere Filtermembran zum Entfernen von Partikulaten, und
   ein Ionenaustauschharz.

2. System nach Anspruch 1, wobei: es sich bei dem Aminopolyol-Liganden um N-Methyl-D-glucamin handelt.

3. System nach Anspruch 1 oder Anspruch 2, wobei die polymere Basismembran ein Polyolefin oder ein halogeniertes Polymer umfasst.

4. System nach einem vorhergehenden Anspruch, wobei die polymere Basismembran Polyethylen, optional ultrahochmolekulares Polyethylen, umfasst.

5. System nach einem vorhergehenden Anspruch, wobei die poröse polymere Basismembran eine Porengröße aufweist, die durch einen Blasenpunkt in einem Bereich von 27579 Pa bis 1,10316 MPa (4 psi bis 160 psi) gekennzeichnet ist, wobei der unter Verwendung von Ethoxynonafluorbutan (HFE-7200) gemessene Blasenpunkt als das Benetzungslösungsmittel bei einer Temperatur von 22 °C verwendet wird.

6. System nach einem vorhergehenden Anspruch, wobei die mikroporöse polymere Filtermembran frei von dem Aminopolyol-Liganden ist.

7. System nach einem vorhergehenden Anspruch, wobei die mikroporöse polymere Filtermembran einen Blasenpunkt in einem Bereich von etwa 6894,76 Pa bis 0,689476 MPa (10 psi bis 100 psi) aufweist, wobei der Blasenpunkt unter Verwendung von Ethoxynonafluorbutan (HFE 7200) als Benetzungsmittel bei einer Temperatur von 20-25 °C gemessen wird.

8. System nach einem vorhergehenden Anspruch, wobei:

   das System so konfiguriert ist, dass der Quellwasserstrom zuerst durch das Ionenaustauschharz und zweitens durch die zusammengesetzte polymere Filtermembran geleitet wird, oder
   das System so konfiguriert ist, dass der Quellwasserstrom zuerst durch die zusammengesetzte polymere Filtermembran und zweitens durch das Ionenaustauschharz geleitet wird.

9. Verfahren zum Entfernen einer Verunreinigung aus einem Quellwasserstrom, wobei das Verfahren das Strömenlassen des Quellwassers durch eine polymere Filtermembran umfasst, die Folgendes umfasst:

   eine erste poröse polymere Basismembran, und
   einen Aminopolyol-Liganden, der drei oder mehr Hydroxylgruppen aufweist, die an die polymere Basismembran gebunden sind,
   Entfernen von Siliciumdioxidpartikeln aus dem Quellwasser, indem das Quellwasser durch eine zweite poröse polymere Filtermembran geleitet wird, die wirksam ist, um Siliciumdioxidpartikel zu entfernen, bevor oder nachdem das Quellwasser durch die erste polymere Filtermembran geleitet wird; und
   Leiten des Quellwasserstroms durch ein Ionenaustauschharz vor oder nach dem Leiten des Quellwasserstroms durch die erste polymere Filtermembran.

10. Verfahren nach Anspruch 9, wobei:

    es sich bei dem Aminopolyol-Liganden um N-Methyl-D-glucamin handelt oder
    die polymere Basismembran Polyethylen umfasst oder
    beides.

11. Verfahren nach einem von Anspruch 9 oder 10, wobei das Quellwasser eines oder mehrere von Folgendem aufweist:

spezifischer Widerstand: > 18,18 MΩ·cm,
gesamter organischer Kohlenstoff: < 1 μg/l,
online gelöster Sauerstoff: < 10 μg/l,
Bakterien: < 1 KBE/100 ml.

12. Verfahren nach einem der Ansprüche 9 bis 11, wobei die Verunreinigung gelöstes Metall oder Bor ist und das Verfahren Wasser herstellt, das Folgendes aufweist:

eine individuelle Metallverunreinigungskonzentration von 0,1 μg/l oder darunter,
eine Borkonzentration von 0,1 μg/l oder darunter oder
beides.

**Revendications**

1. Système utile pour éliminer une impureté d'un flux d'eau source, le système comprenant :

une membrane filtrante polymère composite comprenant : une membrane de base polymère poreuse avec un ligand aminopolyol possédant trois groupes hydroxyle ou plus fixés à la membrane de base polymère, et une membrane filtrante polymère microporeuse pour éliminer les particules, et
une résine échangeuse d'ions.

2. Système de la revendication 1, dans lequel : le ligand aminopolyol est la N-méthyl-D-glucamine.

3. Système de la revendication 1 ou la revendication 2, dans lequel la membrane de base polymère comprend une polyoléfine ou un polymère halogéné.

4. Système de l'une quelconque des revendications précédentes, dans lequel la membrane de base polymère comprend du polyéthylène, éventuellement du polyéthylène à poids moléculaire ultra-élevé.

5. Système de l'une quelconque des revendications précédentes, dans lequel la membrane de base polymère poreuse présente une taille de pore **caractérisée par** un point de bulle dans une plage de 27 579 Pa à 1,10316 MPa (4 psi à 160 psi), le point de bulle mesuré à l'aide d'éthoxy-nonafluorobutane (HFE-7200) est utilisé comme solvant mouillant à une température de 22 °C.

6. Système de l'une quelconque des revendications précédentes, dans lequel la membrane filtrante polymère microporeuse est exempte dudit ligand aminopolyol.

7. Système de l'une quelconque des revendications précédentes, dans lequel la membrane filtrante polymère microporeuse présente un point de bulle dans une plage d'environ 6 894,76 Pa à 0,689476 MPa (10 psi à 100 psi), le point de bulle étant mesuré à l'aide d'éthoxy-nonafluorobutane (HFE 7200) comme agent mouillant à une température de 20-25 °C.

8. Système de l'une quelconque des revendications précédentes, dans lequel :

le système est configuré de sorte que le flux d'eau source passe d'abord à travers la résine échangeuse d'ions, et ensuite à travers la membrane filtrante polymère composite, ou
le système est configuré de sorte que le flux d'eau source passe d'abord à travers la membrane filtrante polymère composite, et ensuite à travers la résine échangeuse d'ions.

9. Procédé d'élimination d'une impureté d'un flux d'eau source, le procédé comprenant l'écoulement de l'eau source à travers une membrane filtrante polymère qui comprend :

une première membrane de base polymère poreuse, et
un ligand aminopolyol possédant trois groupes hydroxyle ou plus fixés à la membrane de base polymère,
l'élimination des particules de silice dans l'eau source en faisant passer l'eau source à travers une seconde membrane filtrante polymère poreuse qui est efficace pour éliminer les particules de silice, avant ou après le passage de l'eau source à travers la première membrane filtrante polymère ; et

le passage du flux d'eau source à travers une résine échangeuse d'ions avant ou après le passage du flux d'eau source à travers la première membrane filtrante polymère.

10. Procédé de la revendication 9, dans lequel :

le ligand aminopolyol est la N-méthyl-D-glucamine, ou
la membrane de base polymère comprend du polyéthylène, ou
les deux.

11. Procédé de la revendication 9 ou 10, dans lequel l'eau source présente un ou plusieurs des éléments suivants :

résistivité : > 18,18 M$\Omega\cdot$cm,
carbone organique total : < 1 $\mu$g/l,
oxygène dissous en ligne : <10 $\mu$g/l,
bactéries : < 1 UFC/100 ml.

12. Procédé de l'une quelconque des revendications 9 à 11, dans lequel l'impureté est du métal ou du bore dissous, et le procédé produit de l'eau possédant :

une concentration d'impuretés métalliques individuelles de 0,1 $\mu$g/l ou moins,
une concentration de bore de 0,1 $\mu$g/l ou moins, ou
les deux.

**Figure 1**

**Figure 2**

Figure 3

Figure 4

Figure 5A

Figure 5B

Figure 6

**Figure 7**

Figure 8

Figure 9

FILTER 1 SiO2 PARTICLE RETENTION USING SEMI C79 TEST

⊡ 0.05 MONOLAYERS   ⊠ 0.1 MONOLAYERS   ⊠ 0.2 MONOLAYERS

% RETENTION

PARTICLE DIAMETER (nm)

**Figure 10**

REMOVAL OR BORON IN UPW

CONCENTRATION (ppb)

SPIKED FEED   TECH A   TECH B   TECH C

**Figure 11**

26

Figure 12

Figure 13

Figure 14

Figure 15

Figure 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020254398 A
- US 20200254398 A
- US 2928819 A
- US 20030018091 A, Pafford
- WO 2008144115 A, Harris
- WO 2017205722 A, Jaber
- WO 2016081729 A1, Jaber
- US 20090039019 A1, Raman